Europäisches Patentamt

European Patent Office

Office européen des brevets

(19)

(11) Publication number: **0 117 947**

**A1**

(12) **EUROPEAN PATENT APPLICATION**

(21) Application number: **83307222.6**

(22) Date of filing: **28.11.83**

(51) Int. Cl.³: **A 01 G 25/14**
**B 05 B 7/24**

(30) Priority: **26.11.82 GB 8233711**

(43) Date of publication of application:
**12.09.84 Bulletin 84/37**

(84) Designated Contracting States:
**DE FR GB IT NL**

(71) Applicant: **NEWLIN OIL COMPANY LIMITED**
**Brant Road**
**Lincoln LN5 9AD(GB)**

(72) Inventor: **Smith, Steven Kinsey**
**18 High Street**
**Washingborough Lincoln(GB)**

(74) Representative: **Coxon, Philip**
**Eric Potter & Clarkson 14 Oxford Street**
**Nottingham NG1 5BP(GB)**

(54) **Fluid dispensing device.**

(57) A fluid dispensing device (1) comprises means (3) to dispense a first fluid in a substantially continuous liquid form from a first reservoir (2). The device includes means (6, 13) to dispense a second fluid in a spray from a second liquid reservoir (4). The first and second reservoirs are adapted to prevent communication between the first and second fluids.

FIG.1

## FLUID DISPENSING DEVICE

This invention relates to a fluid dispensing or delivering device.

According to the present invention there is provided a fluid dispensing device comprising means to dispense a first fluid, in a substantially continuous liquid form, from a first reservoir, and means to dispense a second fluid, in a spray form, from a second reservoir, said first and second reservoirs being adapted to prevent communication between the first and second fluids.

Advantageously the second reservoir is disposed within the first reservoir.

Preferably the means to dispense the second fluid includes a pump and a spray jet, said pump being adapted to pump the second fluid from the second reservoir to the spray jet.

Desirably the fluid dispensing device has a trigger for actuating the pump.

Preferably the fluid dispensing device is provided with a handle disposed adjacent to the trigger, so that a person can hold the device by the handle and can operate the trigger with the same hand.

Desirably the trigger is movable between a first position in which the second fluid can be drawn from the second reservoir by the pump, and a second position in which the second fluid can be expelled from the spray jet by the pump, said trigger being biased towards the second position.

It is preferable that the first and second reservoirs are each provided with a separate aperture through which they can be filled with the first and second fluid respectively.

It is further preferable that the second reservoir is removable.

It is desirable that the first fluid can be dispensed in spray form when the second reservoir is removed.

The fluid dispensing device of the present invention provides many advantages over prior fluid dispensing devices. In particular the two separate reservoirs enable a completely different fluid to be sprayed from that which is dispensed continously. Furthermore the arrangement of the reservoirs makes it possible for the dispenser to be very compact. In addition, the dispenser is extremely flexible in use, particularly because of the removability of the second reservoir.

Reference is now made to the accompanying drawings, in which:

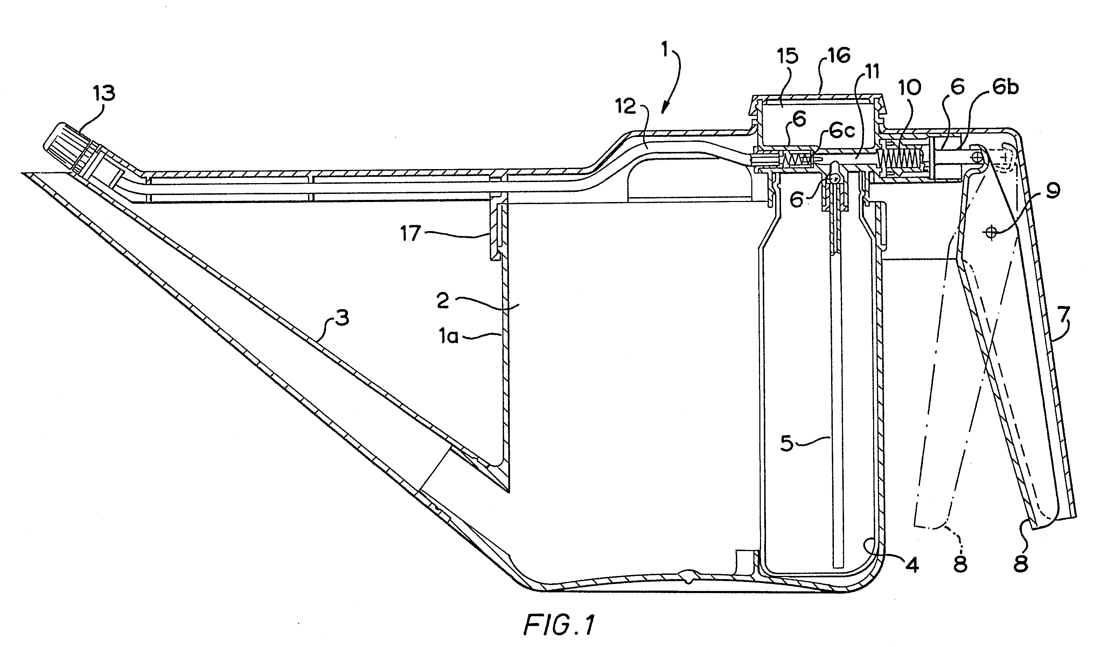

Figure 1 is a cross-sectional elevation of a fluid dispensing device according to the invention; and

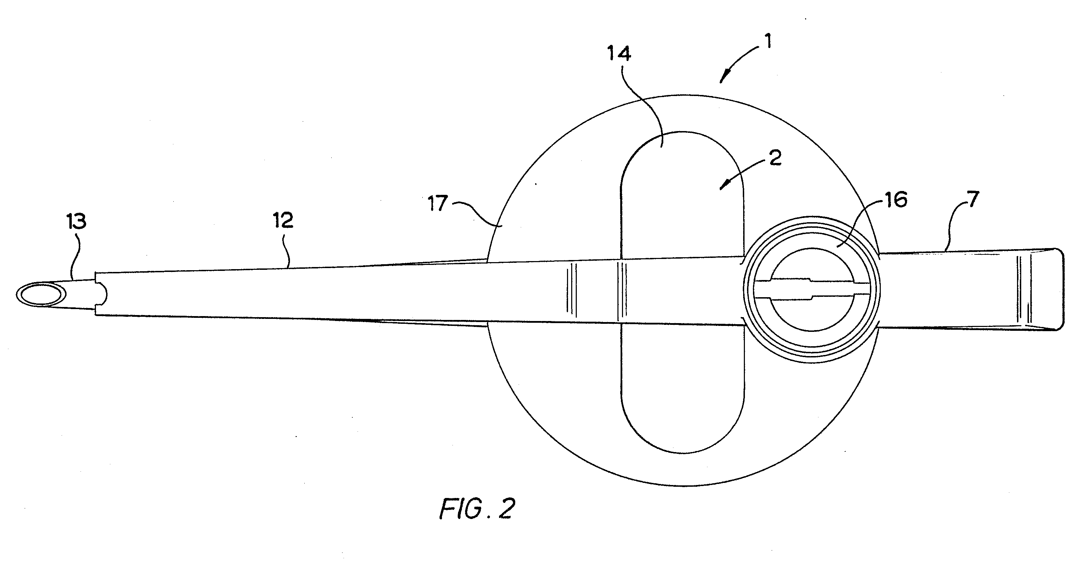

Figure 2 is a plan view of the device shown in Figure 1.

In the drawings a fluid dispensing device is generally designated 1. The device 1 is of similar form to a conventional watering can, in that it is able to pour water.

The device 1 has a housing 1a which defines a first reservoir 2, which reservoir is in fluid communication with a spout 3. The first reservoir 2 may be filled with a first fluid, preferably a liquid such as water.

The device 1 is also provided with a cylindrical second reservoir 4 which is adapted to receive a second fluid, for example an insecticide. The second reservoir 4 is sealed in order to prevent communication between the first and second fluids.

A tube 5 has one end arranged adjacent the bottom of the second reservoir, and another end, connected to a one-way valve 6a which forms part of a pump 6.

A handle 7 is affixed to the housing 1a, and the pump 6 extends into the handle. A trigger 8 is pivotably mounted to the handle 7 at pivot mounting 9. The trigger 8 is affixed at one end to a movable part 6b of the pump 6. The trigger 8 is movable between a first position shown in full lines, and a second position shown in dotted lines. A spring 10 biases the movable part 6b and the trigger to the second position.

A chamber 11 is defined within the pump 6 into which the second fluid is drawn prior to being sprayed. The pump 6 is provided with a second one-way valve 6c, through which the second fluid can be ejected into a tube 12 towards spray jet 13. The spray jet 13 can be any conventional spray jet arrangement.

The first reservoir 2 can be filled with first fluid through an aperture 14, and the second reservoir 4 can be filled with second fluid through an aperture 15; the aperture 15 is provided with a cap 16.

The top of the device 1 comprises a cap 17 which is removable so that the second reservoir can be removed from the device if desired.

In use, the first reservoir 2 is filled with a first fluid through the aperture 14, and the second reservoir 4 is filled with second fluid through the aperture 15. When the device 1 is to be used for horticultural applications it is convenient for the first fluid to be water, and for the second fluid to be an insecticide.

The first fluid is dispensed by tipping the device 1 so that the first fluid flows through the spout 3.

The second fluid is dispensed by pulling the trigger 8 to the second position. This reduces the volume of the chamber 11, thereby forcing the second fluid out of the chamber through the second one-way valve 6c, and through the tube 12 to the spray jet 13, from where the second fluid is sprayed. The one-way valve 6a prevents fluid passing down the tube 5.

When the trigger 8 is released it pivots about pivot point 9, returning to the first position. The second one-way valve 6c closes and the first one-way valve 6a opens. As the movable part 6b moves to the second position the volume of the chamber 9 expands drawing the second fluid from the second reservoir 4, through the tube 5, and into the chamber. The cycle can then be repeated.

The cap 17 can be removed so that the second reservoir 4 can be detached. In this case the tube 5 extends into the first reservoir so that the first fluid can be both sprayed and poured. It should be noted that the removal of the second reservoir 4 increases the volume of the first resevoir 2 by an amount substantially equal to the volume of the second reservoir.

The device 1 can be provided with additional separate reservoirs (not shown) which can be disposed within the first reservoir. The additional reservoirs may all be connected to respective spray jets, and may be operable by respective pump and trigger arrangements. For example, a third reservoir could be provided for spraying a nutrient solution.

CLAIMS

1. A fluid dispensing device (1) characterised by means (3) to dispense a first fluid, in a substantially continuous liquid form, from a first reservoir (2), and means (6, 13) to dispense a second fluid, in a spray form, from a second reservoir (4), said first and second reservoirs (2, 4) being adapted to prevent communication between the first and second fluids.

2. A fluid dispensing device according to Claim 1 characterised in that the second reservoir (4) is disposed within the first reservoir (2).

3. A fluid dispensing device according to Claim 1 or 2, characterised in that the means to dispense the second fluid includes a pump (6) and a spray jet (13), said pump (6) being adapted to pump the second fluid from the second reservoir (4) to the spray jet (13).

4. A fluid dispensing device according to Claim 3 characterised by a trigger (8) for actuating the pump (6).

5. A fluid dispensing device according to Claim 4 characterised by a handle (7) disposed adjacent to the trigger (8).

6. A fluid dispensing device according to Claim 4 or 5 characterised in that the trigger (8) is movable between a first position in which the second fluid can be drawn from the second reservoir (4) by the pump (6), and a second position in which the second fluid can be expelled from the spray jet (13) by the pump (6), said trigger (8) being biased towards the second position.

7. A fluid dispensing device according to any preceding claim characterised in that the first and second reservoirs (2, 4) are each provided with a separate aperture (14, 15) through which they can be filled with the first and second fluid respectively.

8. A fluid dispensing device according to any preceding claim characterised in that the second reservoir (4) is removable.

9. A fluid dispensing device according to Claim 8 characterised in that the first fluid can be dispensed in spray form when the second reservoir (4) is removed.

FIG.1

0117947

1/2

FIG.2

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A | US-A-3 178 118 (NEW)<br>* column 1, line 48 - column 2, line 20; figure 1 *<br>--- | 1 | A 01 G  25/14<br>B 05 B   7/24 |
| A | US-A-4 112 964 (BANKS)<br>* the entire document *<br>--- | 1,2 | |
| A | DE-C-  78 812 (ALBRECHT)<br>* the entire document *<br><br>----- | 1 | |

|  |
|---|
| TECHNICAL FIELDS SEARCHED (Int. Cl. ³) |
| A 01 G<br>A 01 M<br>B 05 B |

The present search report has been drawn up for all claims

| Place of search<br>THE HAGUE | Date of completion of the search<br>28-02-1984 | Examiner<br>HERYGERS J.J. |
|---|---|---|